# EUROPEAN PATENT APPLICATION

(11) **EP 4 447 555 A1**
(43) Date of publication of application: **16.10.2024**
(21) Application number: 22903876.5
(22) Date of filing: 20.10.2022
(51) Int. Cl.: H04W 36/22, H04W 16/26, H04W 36/24, H04W 36/38

(54) **COMMUNICATION DEVICE, CONTROL METHOD, AND PROGRAM**

(30) Priority: 10.12.2021 JP 2021201171
(71) Applicant: CANON KABUSHIKI KAISHA, Tokyo 146-8501 (JP)
(72) Inventor: ONDA, Taiga, Tokyo 146-8501 (JP)
(74) Representative: Canon Europe Limited
(86) International application number: PCT/JP2022/039074
(87) International publication number: WO 2023/105942

(57) **Abstract**

A communication apparatus operating as a first relay node configured to relay communication between a base station and a user equipment in a mobile communication system, comprises: reception means for receiving a notification signal representing the presence of a second relay node different from the first relay node; and instruction means for instructing, in a case where the notification signal is received by the reception means, one or more pieces of user equipments connected to the first relay node to execute handover to the second relay node.

## Description

### TECHNICAL FIELD

The present invention relates to load distribution processing of communication in a mobile communication system.

### BACKGROUND ART

In 3GPP (3rd Generation Partnership Project), IAB (Integrated Access and Backhaul) has been standardized as a communication technique for backhaul. IAB is a technique of simultaneously using, as backhaul communication, access communication between a base station and a UE (User Equipment) (PTL 1). For IAB, for example, millimeter wave radio communication in a 28-GHz band or the like is used.

In backhaul communication using the IAB technique, a relay apparatus called an IAB node relays, by millimeter wave communication, communication from a base station called an IAB donor. By using the IAB technique, it is possible to widen the coverage of an area at low cost, as compared with wired communication by a conventional optical fiber or the like.

If IAB is used, a user equipment periodically notifies a base station of peripheral environment information in backhaul communication. Upon receiving the peripheral environment information from the user equipment, the base station requests the user equipment to execute handover to another IAB node, as needed. PTL 2 discloses a technique in which a user equipment notifies a base station of peripheral environment information and the base station leads to execute handover of the user equipment.

### CITATION LIST

### PATENT LITERATURE

PTL 1: Japanese Patent Laid-Open No. 2019-534625
PTL 2: Japanese Patent Laid-Open No. 2006-217562

### SUMMARY OF INVENTION

### TECHNICAL PROBLEM

In a status in which many UEs are concentrated (in a stadium, a large-scale offline event, or the like), it is considered that communication of an IAB node connected to the many UEs is in a high load state. An IAB node that is installed on the periphery and is normally used will be referred to as a "normal IAB node" hereinafter. At this time, to reduce the load of the normal IAB node, an IAB node (to be referred to as a "temporary IAB node" hereinafter) that is installed in a vehicle or the like and is usable as a temporary relay station may be installed. In this status, in a conventional handover procedure, it is impossible to hand over a user equipment between the IAB nodes. Therefore, the base station desirably leads to execute handover of the user equipment between the IAB nodes.

However, if the technique disclosed in PTL 2 is used, many UEs need to notify a base station (IAB donor) of peripheral environment information via a normal IAB node in a high load state. In addition, the handover procedure of the user equipment is needed for each user equipment. Therefore, in an environment in which many user equipments are concentrated, the communication amount between the user equipments and the base station largely increases.

The present invention has been made in consideration of this problem, and provides a technique capable of more effectively distributing the load of communication.

### SOLUTION TO PROBLEM

To solve the above problem, a communication apparatus according to the present invention has the following arrangement. That is, a communication apparatus operating as a first relay node configured to relay communication between a base station and a user equipment in a mobile communication system comprises
reception means for receiving a notification signal representing the presence of a second relay node different from the first relay node, and
instruction means for instructing, in a case where the notification signal is received by the reception means, one or more user equipments connected to the first relay node to execute handover to the second relay node.

### ADVANTAGEOUS EFFECTS OF INVENTION

According to the present invention, it is possible to provide a technique capable of more effectively distributing the load of communication. Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a block diagram showing the hardware arrangement of a communication apparatus;
Fig. 2 is a block diagram showing the functional arrangement of the communication apparatus;
Fig. 3A is a view showing a system configuration before load distribution;
Fig. 3B is a view showing a system configuration after load distribution;
Fig. 4 is a sequence chart in a system in load distribution processing;
Fig. 5 is a flowchart illustrating the operation of a temporary IAB node;
Fig. 6A is a flowchart illustrating the operation of a normal IAB node;
Fig. 6B is another flowchart illustrating the operation of the normal IAB node;
Fig. 7 is a flowchart illustrating the operation of a UE;
Fig. 8 is a flowchart illustrating the operation of an IAB donor; and
Fig. 9 is another flowchart illustrating the operation of the normal IAB node.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (First Embodiment)

As the first embodiment of a communication apparatus according to the present invention, a communication apparatus operating as an IAB node that is a relay node in a mobile communication system will be exemplified below. The mobile communication system is, for example, a 5G mobile communication system, and the IAB node can be a RAN (Radio Access Network) node that supports both an NR (New Radio) access link and an NR backhaul link.

### <Arrangement of Apparatus>

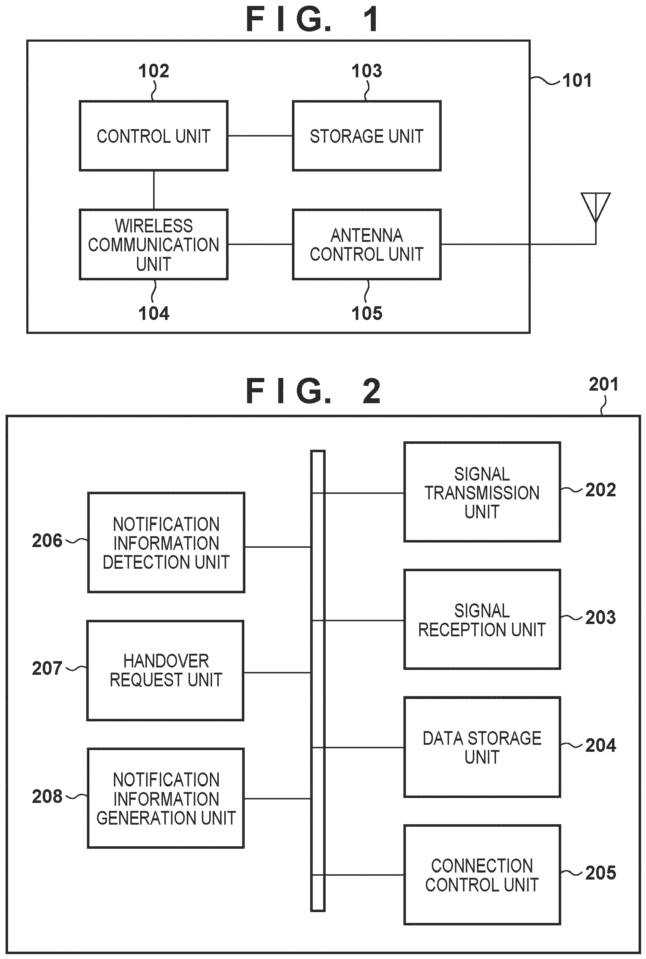

Fig. 1 is a block diagram showing an example of the hardware arrangement of a communication apparatus. A communication apparatus 101 includes a control unit 102, a storage unit 103, a wireless communication unit 104, and an antenna control unit 105. The control unit 102 controls the overall apparatus by executing control programs stored in the storage unit 103. The storage unit 103 stores control programs to be executed by the control unit 102 and various kinds of information (cell information, connection terminal information, IAB routing information, and the like) to be used for control. Various operations to be described later are implemented when the control unit 102 executes the control programs stored in the storage unit 103. The wireless communication unit 104 executes cellular network communication such as LTE or 5G communication complying with the 3GPP standard. The antenna control unit 105 controls an antenna for wireless communication executed by the wireless communication unit 104.

Fig. 2 is a block diagram showing an example of the software functional arrangement of the communication apparatus. A communication apparatus function 201 includes a signal transmission unit 202, a signal reception unit 203, a data storage unit 204, a connection control unit 205, a notification information detection unit 206, a handover request unit 207, and a notification information generation unit 208. The signal transmission unit 202 and the signal reception unit 203 execute, with another apparatus (IAB node or UE), cellular network communication such as LTE or 5G communication complying with the 3GPP standard. The data storage unit 204 stores and holds software programs, IAB routing information, information concerning a connected terminal, and the like.

The connection control unit 205 controls wireless communication performed in the wireless communication unit 104. The detection unit 206 detects notification information from an IAB node existing on the periphery. The handover request unit 207 issues a handover request by transmitting a radio resource control (RRC) message to a UE. The notification information generation unit 208 makes a notification of a signal indicating the presence of the self-apparatus (the communication apparatus 101 as an IAB node).

### <System Configuration and General Operation>

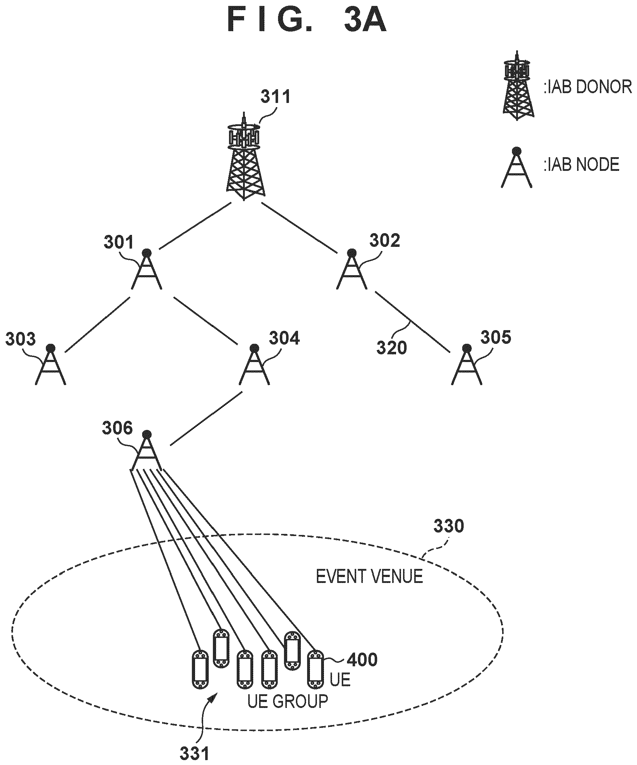

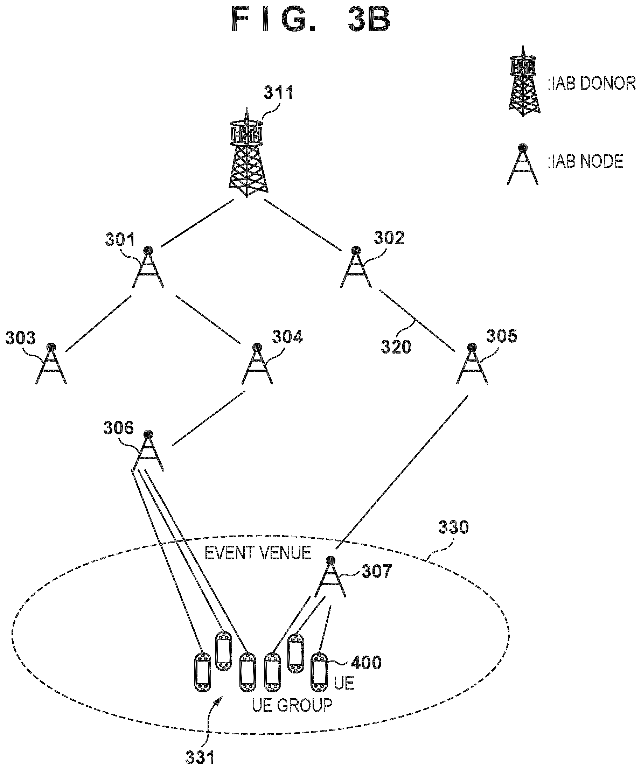

Figs. 3A and 3B are views each showing a system configuration, and especially, exemplarily show states before and after handover of a UE occurs along with load distribution processing (to be described later).

An IAB donor 311 includes IAB nodes 301 to 306 under control, and is configured to establish communication paths indicated by paths 320 between the donor and the plurality of nodes. In this example, the IAB nodes 301 to 306 are assumed to be "normal IAB nodes".

In a large-scale event venue 330, many UEs 400 are concentrated to form a UE group 331. The many UEs 400 included in the UE group 331 are basically connected to the IAB node 306 that is the nearest normal IAB node (a normal IAB node in the best radio wave condition). Therefore, the IAB node 306 is in an extremely high load state. In this case, as shown in Fig. 3B, for the purpose of increasing a communication capacity in the event venue 330 or distributing the load, an IAB node 307 (for example, mounted in a vehicle) as a temporary IAB node may temporarily be installed.

In this status, there is a demand for quickly attempting to distribute the load from the high-load normal IAB node (IAB node 306) to the temporary IAB node (IAB node 307). However, in the current 3GPP standard, each UE collects peripheral environment information, and notifies the IAB donor 311 of the peripheral environment information, and the IAB donor 311 analyzes the notified peripheral environment information. Then, if the IAB donor 311 determines that it is better to hand over the UE to another IAB node, it notifies the UE of an RRC connection reestablishment request (RRC Reconfiguration message). The format of the RRC Reconfiguration message is defined in 3GPP TR 38.331 6.2.2. By performing this processing, handover of the UE to another IAB node is started.

As described above, in the current 3GPP standard, even if a temporary IAB node is input, it is necessary to wait for determination by the IAB donor, and it is thus impossible to quickly hand over the UE. In addition, the above-described sequence needs to be executed for each UE. Therefore, in a status in which many UEs are concentrated, a large amount of messages are exchanged only to execute handover, and thus the load of the normal IAB node further increases.

To cope with this, this embodiment will describe a form in which quick handover of the UE is implemented without intervention of determination by the IAB donor.

### <Overall Operation of System>

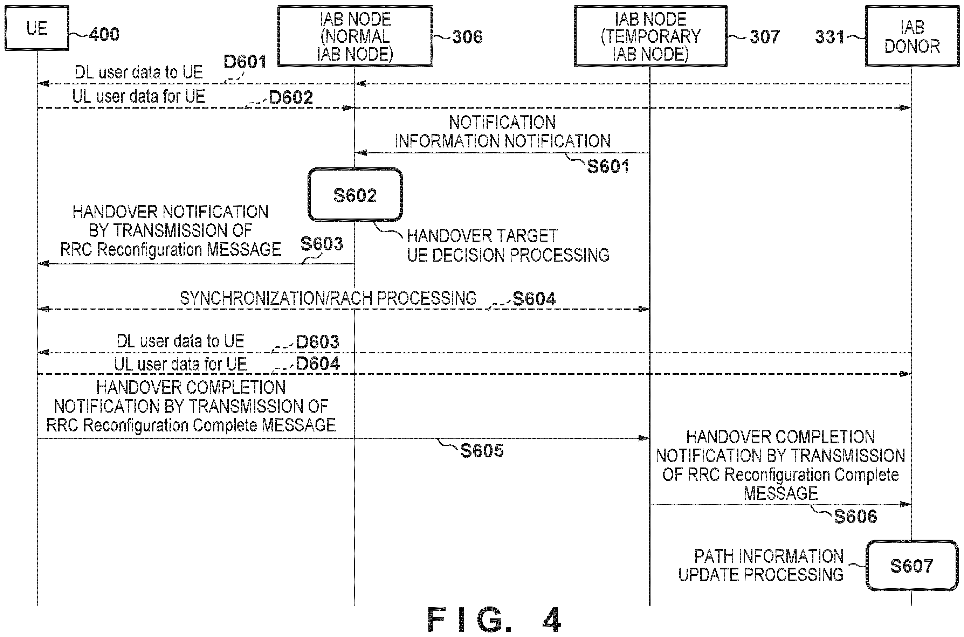

Fig. 4 is a sequence chart showing a processing sequence in the system in the load distribution processing. The UE 400 constructs a communication path with the IAB donor 311 via the IAB node 306 as a normal IAB node. To attempt to distribute the load of the IAB node 306, the IAB node 307 as a temporary IAB node is newly installed in the event venue 330.

In S601, the IAB node 307 transmits notification information by a Beacon, a dedicated message, or the like to make a notification of its presence. At this time, the notification information may include information indicating that "the self-node is a temporarily installed IAB node" or information indicating that "the self-node is an IAB node temporarily installed in association with the IAB node 306".

The notification information is sent in accordance with the 3GPP standard (9.3.1 of 3GPP TS 38.413), especially a notification information format defined in Radio Network Layer. This format is a format that allows a notification by including up to 256 types of information. The above-described notification information is added to a portion of a reserved area or free area in the current standard, and is sent.

In S602, upon receiving the notification information from the temporary IAB node 307, the IAB node 306 executes processing of deciding one or more UEs as targets of execution of handover.

In S603, the IAB node 306 instructs the one or more UEs, which have been decided to be targets by the decision processing in S602, to execute handover. To make a notification of the instruction, the RRC Reconfiguration message defined in the 3GPP standard is used. More specifically, a dedicated SIB 1-Delivery message is used to designate the ID of the IAB node 307 as a handover destination (reconnection destination). Alternatively, a new definition dedicated for this notification may be added to an RRC Reconfiguration message field.

In S604, upon receiving the handover request, the UE 400 starts handover from the IAB node 306 to the IAB node 307. More specifically, the UE 400 executes synchronization establishment processing and RACH processing for the IAB node 307 and is connected to the IAB node 307. The synchronization establishment processing and RACH processing indicate processing defined in the 3GPP standard and executed when the UE is connected to the IAB node for the first time, that is, processing of executing synchronization and RACH (Random Access Channel) frequency decision processing between the UE and the IAB node and establishing link synchronization between the UE and the IAB node.

In S605, upon completion of connection to the IAB node 307, the UE 400 sends a handover completion notification to the temporary IAB node 307. For this notification, an RRC Reconfiguration Complete message defined in the 3GPP standard is used. As information for the IAB donor 311 to perform appropriate path information update processing, information indicating that "handover is executed between the IAB nodes (that is, from the IAB node 306 to the IAB node 307)" is added to this notification.

In S606, upon receiving the handover completion notification, the IAB node 307 relays the notification and transmits it to the upper IAB donor 311. In S607, the IAB donor 311 updates the communication path information of the UE corresponding to the handover completion notification.

### <Operation of Each Apparatus>

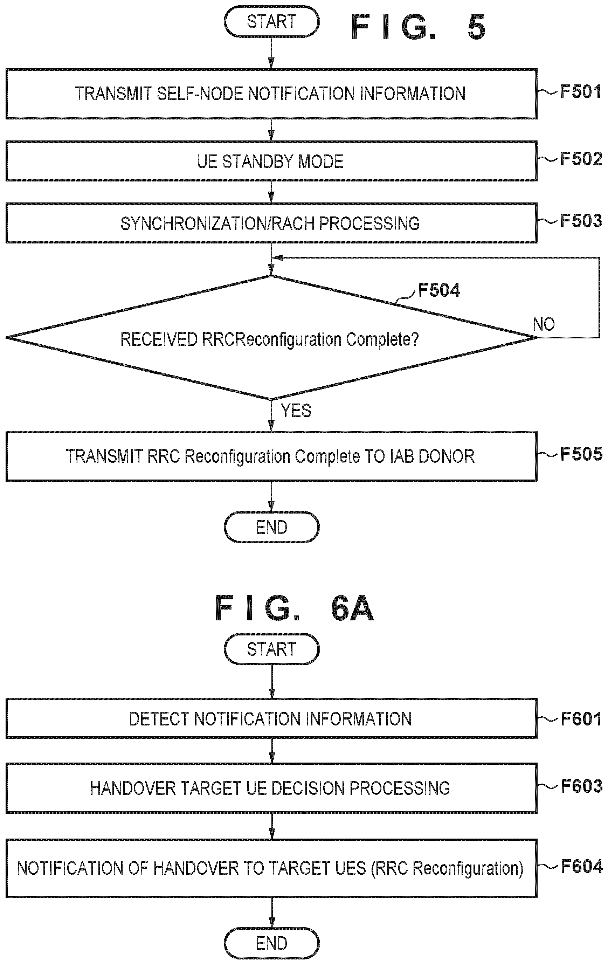

Fig. 5 is a flowchart illustrating the operation of the IAB node 307 as a temporary IAB node.

In step F501, the IAB node 307 transmits notification information indicating the presence of the self-node. This notification information may include information indicating that "the self-node is a temporarily installed IAB node" or information indicating that "the self-node is an IAB node temporarily installed in association with the IAB node 306". In step F502, the IAB node 307 waits for connection from a UE. In step F503, upon detecting connection of a UE, the IAB node 307 performs synchronization/RACH processing with the UE to establish a link.

In step F504, the IAB node 307 receives an RRC Reconfiguration Complete message as a handover completion notification of the UE. In step F505, the IAB node 307 relays the RRC Reconfiguration Complete message received in step F504 and transmits it to the upper IAB donor 311.

Fig. 6A is a flowchart illustrating the operation of the IAB node 306 as a normal IAB node.

In step F601, the IAB node 306 detects notification information transmitted from the IAB node 307. In step F603, the IAB node 306 executes processing of deciding one or more UEs as targets of execution of handover. In this processing, processing of appropriately distributing the load between the IAB nodes 306 and 307 is executed. For example, about half of the plurality of UEs connected to the IAB node 306 are decided as handover targets. Alternatively, one or more UEs are decided as handover targets so that the communication amounts of the IAB nodes 306 and 307 are almost equal to each other. In step F604, the IAB node 306 makes a handover notification to the one or more UEs decided as targets of execution of handover. For this notification, an RRC Reconfiguration message is used.

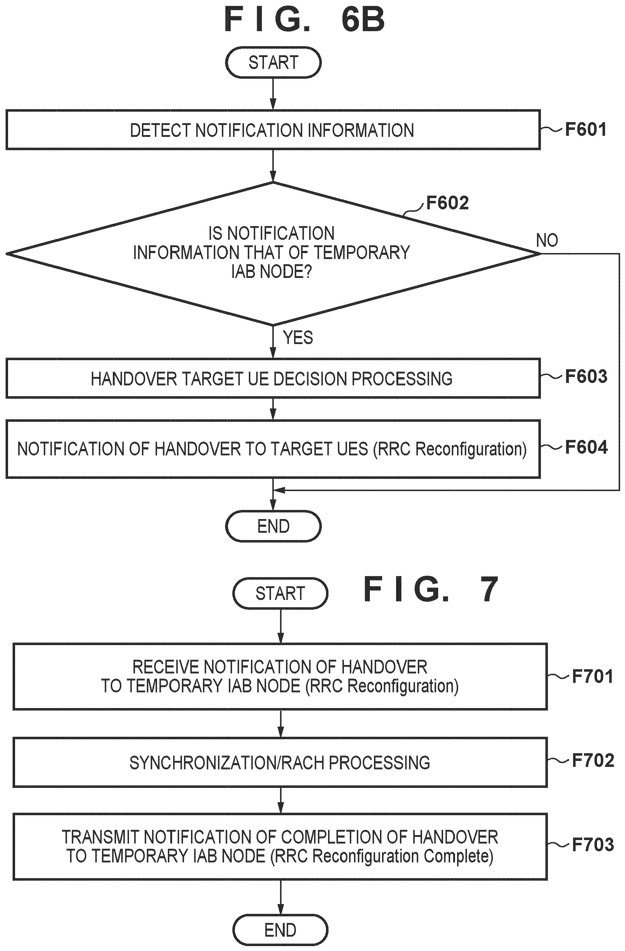

Fig. 6B is another flowchart illustrating the operation of the IAB node 306 as a normal IAB node. Fig. 6B is different from Fig. 6A in that processing of step F602 is added before performing the processing of deciding one or more UEs as targets of execution of handover in step F603.

In step F602, the IAB node 306 determines whether the notification information detected in step F601 includes information indicating that "the self-node is a temporarily installed IAB node". If the notification information includes such information (that is, in a case of a notification signal transmitted from the temporary IAB node), the process advances to step F603; otherwise (that is, in a case of a notification signal transmitted from the normal IAB node), the process ends.

Alternatively, it may be determined whether the notification information detected in step F601 includes information indicating that "the self-node is an IAB node temporarily installed in association with the IAB node 306". If the notification information includes such information (that is, in a case of a notification signal transmitted from the temporary IAB node associated with the IAB node 306), the process advances to step F603; otherwise (that is, in a case of a notification signal transmitted from the temporary IAB node associated with a node other than the IAB node 306 or transmitted from the normal IAB node), the processing ends. By executing this processing, it is possible to suppress the processing shown in Fig. 4 from being performed when a normal IAB node other than the IAB node 306 receives a notification signal from the IAB node 307 as a temporary IAB node. That is, the IAB nodes 301 to 305 do not execute the processing shown in Fig. 4 even if they receive a notification signal from the IAB node 307.

Fig. 7 is a flowchart illustrating the operation of the UE 400. This processing is executed by one or more UEs that have received an RRC Reconfiguration message, among the many UEs 400 included in the UE group 331.

In step F701, upon receiving the RRC Reconfiguration message as a handover notification from the currently connected IAB node 306, the UE 400 starts handover processing. That is, the UE 400 starts handover from the IAB node 306 to the IAB node 307. In step F702, the UE 400 executes synchronization establishment processing and RACH processing with the IAB node 307, and is connected to the IAB node 307. In step F703, the UE 400 transmits an RRC Reconfiguration Complete message as a handover completion notification to the IAB node 307.

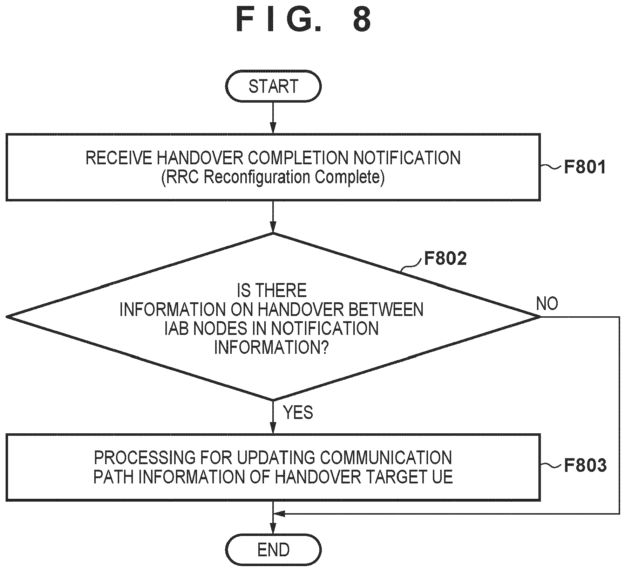

Fig. 8 is a flowchart illustrating the operation of the IAB donor 311. As described above, the IAB donor 311 is not directly involved in the load distribution processing but updates communication path information for each of the one or more UEs that have executed handover as a result of the load distribution processing.

In step F801, the IAB donor 311 receives an RRC Reconfiguration Complete message as a handover completion notification from the IAB node 307. In step F802, the IAB donor 311 determines whether the handover completion notification includes information indicating that "handover is executed between the IAB nodes". If the handover completion notification includes such information, the process advances to step F803; otherwise, the process ends. In step F803, the IAB donor 311 updates the communication path information for each of the one or more UEs that have executed handover.

As described above, according to the first embodiment, an IAB node as a relay node in the mobile communication system leads to execute handover of a UE. More specifically, upon detecting the IAB node 307 as a temporary IAB node, the IAB node 306 as a normal IAB node controls one or more UEs included in the many UEs currently connected to the IAB node 306 to execute handover to the IAB node 307. This control can implement quick handover of the UE without intervention of determination by the IAB donor, thereby appropriately distributing the load of communication between the normal IAB node and the temporary IAB node.

### (Modification)

The IAB node 306 as a normal IAB node may be configured to further use other information in the processing (S602 and step F603) of deciding one or more UEs as targets of execution of handover.

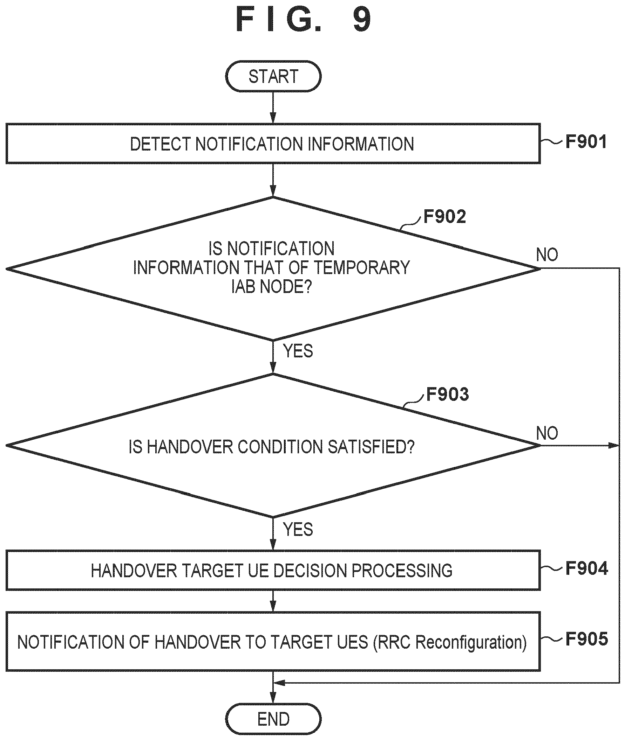

Fig. 9 is a flowchart illustrating the operation of the normal IAB node according to the modification. Fig. 9 is obtained by further adding, to Fig. 6B, processing (step F903) of checking whether a condition for handing over a UE is satisfied. In step F903, for example, it is checked whether the processing load of the IAB node 306 exceeds a predetermined threshold or whether the number of UEs currently connected to the IAB node 306 exceeds a predetermined threshold. Then, if the predetermined threshold is exceeded, it is determined that the condition for handing over the UE is satisfied. In addition, weighting depending on a communication amount (band) used by the one or more UEs as targets of execution of handover may be checked.

After completion of the processing sequence shown in Fig. 4, the load of communication is distributed between the normal IAB node and the temporary IAB node. However, the load may be biased to one of the nodes with time. To cope with this, the number of connected UEs/communication amount may periodically be exchanged between the normal IAB node and the temporary IAB node. Then, if the bias exceeding a predetermined threshold is detected, the processes in S602 to S607 of Fig. 4 may be re-executed.

The IAB node 307 as a temporary IAB node is assumed to be installed in the event venue 330. However, in some cases, not all the UEs of the UE group 331 are located in the coverage of the IAB node 307. Therefore, the IAB node 306 is configured to confirm a Measurement Report notification periodically transmitted by each UE prior to the processing (S602 and step F603) of deciding one or more UEs as targets of execution of handover. More specifically, it is checked, based on the notification, whether the UE that has transmitted the notification can find the IAB node 307. Then, only the UE that can find the IAB node 307 is considered as a candidate of the one or more UEs in the processing (S602 and step F603).

Furthermore, to install the IAB node 307 as a temporary IAB node (that is, prior to S601 of Fig. 4), it may be configured to control an upper node to which the IAB node 307 is connected. That is, if the IAB node 307 is a lower node of the IAB node 306, the load of communication of the IAB node 306 with an upper node (IAB node 304) is not distributed. Therefore, when the IAB node 307 attempts, as a lower node, to perform connection to the IAB node 306, the IAB node 306 may perform processing of, for example, denying connection of the IAB node 307/leading the connection destination of the IAB node 307.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2021-201171 filed December 10, 2021, which is hereby incorporated by reference herein.

## Claims

1. A communication apparatus operating as a first relay node configured to relay communication between a base station and a user equipment in a mobile communication system, **characterized by** comprising:
reception means for receiving a notification signal representing the presence of a second relay node different from the first relay node; and
instruction means for instructing, in a case where the notification signal is received by the reception means, one or more user equipments connected to the first relay node to execute handover to the second relay node.

2. The communication apparatus according to claim 1, **characterized in that** in a case where the notification signal is received by the reception means and it is determined based on the notification signal that the second relay node satisfies a specific condition, the instruction means instructs the one or more user equipments connected to the first relay node to execute handover to the second relay node.

3. The communication apparatus according to claim 1 or 2, **characterized in that** the first relay node is an IAB (Integrated Access and Backhaul) node configured to support both a backhaul link with a base station and an access link with a user equipment.

4. The communication apparatus according to any one of claims 1 to 3, **characterized in that** the instruction means instructs to execute the handover using a radio resource control (RRC) message.

5. The communication apparatus according to any one of claims 1 to 4, **characterized in that** the notification signal includes first information indicating that the second relay node is a temporarily installed relay node.

6. The communication apparatus according to claim 5, **characterized in that** the notification signal further includes second information indicating that the second relay node is a relay node installed in association with the first relay node.

7. The communication apparatus according to claim 5 or 6, **characterized in that** only in a case where the notification signal includes the first information, the instruction means instructs the one or more user equipments connected to the first relay node to execute handover to the second relay node.

8. The communication apparatus according to claim 6, **characterized in that** only in a case where the notification signal includes the second information, the instruction means instructs the one or more user equipments connected to the first relay node to execute handover to the second relay node.

9. The communication apparatus according to any one of claims 1 to 8, **characterized by** further comprising determination means for determining whether a processing load of the first relay node exceeds a predetermined threshold,
wherein in a case where the determination means determines that the processing load of the first relay node exceeds the predetermined threshold, the instruction means instructs the one or more user equipments connected to the first relay node to execute handover to the second relay node.

10. The communication apparatus according to claim 9, **characterized in that** the processing load is the number of user equipments connected to the first relay node and/or a communication amount processed by the first relay node.

11. A control method for a communication apparatus operating as a first relay node configured to relay communication between a base station and a user equipment in a mobile communication system, **characterized by** comprising:
a reception step of receiving a notification signal representing the presence of a second relay node different from the first relay node; and
an instruction step of instructing, in a case where the notification signal is received in the receiving, one or more user equipments connected to the first relay node to execute handover to the second relay node.

12. A program for causing a computer to execute a control method defined in claim 11.
